**Europäisches Patentamt**

**European Patent Office**

**Office européen des brevets**

(19)

(11) Veröffentlichungsnummer: **0 083 042**

**B1**

(12) # EUROPÄISCHE PATENTSCHRIFT

(45) Veröffentlichungstag der Patentschrift:
08.03.89

(51) Int. Cl.⁴: **B 62 D 1/26**

(21) Anmeldenummer: **82111752.0**

(22) Anmeldetag: **17.12.82**

(54) **Rollenführungseinrichtung zur Verwendung an einem Fahrzeug.**

(30) Priorität: **24.12.81 DE 3151410**

(43) Veröffentlichungstag der Anmeldung:
**06.07.83 Patentblatt 83/27**

(45) Bekanntmachung des Hinweises auf die Patenterteilung:
**08.03.89 Patentblatt 89/10**

(84) Benannte Vertragsstaaten:
**AT BE CH DE FR GB IT LI NL SE**

(56) Entgegenhaltungen:
**DE-A-2 636 656**
**FR-A-2 268 676**
**FR-A-2 271 093**
**FR-A-2 281 866**
**GB-A-1 336 737**
**US-A-3 712 238**

(73) Patentinhaber: **M.A.N. Nutzfahrzeuge GmbH,
Dachauer Strasse 667 Postfach 50 06 20, D-8000
München 50 (DE)**

(72) Erfinder: **Thudt, Hubert, Adenauer- Strasse 32,
D-8031 Puchheim/Bhf. (DE)**
Erfinder: **Winkler, Harald, Konrad- Deubler- Gasse
4/50, A-8010 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft ein Fahrzeug mit Rollenführungseinrichtung, die eine Tastrolle, die an eine stationäre Rollspurführung anlegbar ist, und eine Rollenhalterung aufweist, die im wesentlichen aus einem mit dem Lenkgestänge verbundenen Haltearm und einem am vorderen Haltearmende schwenkbar befestigten Schwenkarm besteht, der an seinem freien Ende die frei drehbare Tastrolle haltert, wobei der Schwenkarm aus einer eingefahrenen Stellung, in der er den Haltearm in Schwenkachsrichtung im wesentlichen überlagert, in eine ausgefahrene, im wesentlichen gestreckte Stellung um ca. 180° schwenkbar ist, in welcher der Schwenkarm in Bezug auf den Haltearm im wesentlichen ausgerichtet ist.

Rollenführungseinrichtungen zur Verwendung an Laufwerken sind in unterschiedlichster Ausgestaltung bekannt. Sie verfolgen den Zweck, das bewegliche Laufwerk entlang einer vorgegebenen Bahn oder Leitschiene (Rollspurführung) zu führen. Hierbei steht zumindest eine Führungsrolle mit der Rollspurführung in Eingriff.

Neuere Entwicklungen gehen dahin, nicht schienengebundene Fahrzeuge durch zumindest eine seitliche Längsschiene zumindest teilweise automatisch "spur-zu-regeln" (z. B. automatische Spurregelung eines Omnibusses im Bereich einer erhöhten Haltestelle ("spanischer Bahnsteig"). Die das Fahrzeug lenkende Person überläßt dann im Bereich einer Trasse die Fahrzeuglenkung einer Automatik. Grundsätzliche Problematik von seitlich am Fahrzeug angeordneten Rollenführungseinrichtungen ist, daß diese über die Gesamtquererstreckung des Fahrzeugs deutlich hervorstehen müssen, um in die Rollspurführung ohne Beschädigung der Seitenwand des Fahrzeugs eingreifen zu können.

Es ist ein spurgeführtes Fahrzeug mit einer mittig unter dem Fahrzeug angeordneten Leitschiene, gegen welche von beiden Seiten her eine Tastrolle mit vertikaler Drehachse anliegt, bekannt (FR-A-2 271 093). Um hier die Spurführung auch im Bereich von Abzweigungen zu ermöglichen, ist in diesem Bereich mindestens eine zusätzliche Führungsschiene angebracht, welche die eine der beiden Führungsrollen auf ihre von der mittleren Spurschiene abgewandten Seite führt, so daß diese eine Tastrolle imstande ist, die volle Führung des Fahrzeuges zu übernehmen. Die andere der beiden Tastrollen kann dann außer Eingriff mit der Spurführung schwenken und sich somit führungsfrei über Abzweigungen bewegen. Die Einrichtung nach der Druckschrift ist für Sichtkontrolle ungeeignet und für Wartung und Reparatur schwer zugänglich.

Es ist auch eine seitlich des Fahrzeugs wirkende Spurführungseinrichtung bekannt (DE-A-2 636 656). Hier sind die Querführungsrollen über die Fahrzeugräder umgreifende Tragarme an ungefederten Teilen der zugehörigen Fahrzeugachse befestigt und an den Enden der Tragarme einziehbar angeordnet, wobei die Oberkante der Querführungsstege unter Einhaltung eines Sicherheitsabstandes niedriger ist als die Bodenfreiheit des Fahrzeuges. In der Nichtgebrauchsstellung der Tastrolle steht der Schwenkarm gemäß der Druckschrift nach oben und benötigt vergleichsweise viel Raum im Radkasten, zumal dann auch an ungünstiger Stelle die Tastrolle im Radkasten vor dem Fahrzeugreifen positioniert ist.

Aufgabe der Erfindung ist die Schaffung einer Rollenführungseinrichtung der eingangs genannten Art, die bei einfachem und kompaktem Aufbau sowie zuverlässigem Betrieb eine automatische mechanische Spurregelung eines nicht schienengebundenen auch auf andere Weise lenkbaren Fahrzeugs gestattet, wobei das Fahrzeug bei nichtautomatischer Spurregelung Normalbreite besitzt.

Dies wird erfindungsgemäß dadurch gelöst, daß die Tastrolle bei ausgefahrenem Schwenkarm über die Gesamtquererstreckung des Fahrzeuges weit übersteht, die Tastrolle unter Vorspannung an der Rollspurführung anliegt und die Tastrolle gemeinsam mit dem Schwenkarm bei dessen Einfahren um dessen Längsachse um 90° verschwenkbar ist. Beim erfindungsgemäßen Fahrzeug befindet sich die Spurführungsschiene seitlich neben der Fahrbahn, und die Tastrolle muß dementsprechend seitlich über die Außenkontur des Fahrzeuges überstehen, um mit der Spurführung in Berührung zu gelangen. Soweit es sich um sehr lange Fahrzeuge, wie z. B. Gelenkomnibusse handelt, ist ein sehr großer Überstand der Tastrolle erforderlich, um das Durchfahren auch noch verhältnismäßig enger Kurven zu ermöglichen. Spurführungen dieser Art bestehen in der Regel aus einer Betonleiste, deren Oberfläche verhältnismäßig rauh ist, außerdem ist diese Oberfläche stets den vollen Witterungsbedingungen ausgesetzt. Aus diesem Grunde muß die verwendete Tastrolle einen verhältnismäßig großen Durchmesser aufweisen, um trotz der Unebenheiten der Spurführung einigermaßen sanft an dieser entlangzurollen. Der die Tastrolle tragende Schwenkarm wird um 90° verschwenkt, so daß die mit einem großen Durchmesser versehene Tastrolle in eine vertikale Ebene gebracht wird und somit noch weiter unter das Fahrzeug eingezogen werden kann, wodurch letztlich das Verstauen der eingeschwenkten Tastrolle unter dem Fahrzeug ermöglicht wird.

Die Schwenkachse des Schwenkarms kann bei einer vorteilhaften Weiterbildung der Erfindung durch einen Primärantrieb in Form eines am Haltearm befestigten Gleichstromgetriebemotors angetrieben werden. Der Gleichstromgetriebemotor ist zweckmäßigerweise am Haltearm befestigt und steht über einen Kettentrieb mit der Schwenkachse in Verbindung, so daß diese gedreht werden kann.

An der Schwenkachse ist zweckmäßigerweise eine Lastmomentsperre montiert, die den Schwenkarm in der eingefahrenen wie in der ausgeschwenkten Endstellung verriegelt und durch Betätigen des Gleichstromgetriebemotors ohne weiteres entriegelbar ist.

Um eine Drehbewegung des Schwenkarms um seine Längsachse in Abhängigkeit der Schwenkbewegung des Schwenkarms auf einfache Weise zu bewerkstelligen, ist im Schwenkarm ein Sekundärtrieb in Form eines Kegelradgetriebes integriert. Das Kegelradgetriebe umfaßt zweckmäßigerweise ein in Ausrichtung der Schwenkachse angeordnetes Kegelrad, das mit dem Haltearm fest verbunden ist und mit einem weiteren Kegelrad kämmt, das in Ausrichtung der Längsachse des Schwenkarms liegt und an letzterem befestigt ist. Dadurch wird für die Drehung des Schwenkarms kein separater Motor benötigt.

Auf der Längsachse des Schwenkarms ist bevorzugt ein Rotationsanschlag vorgesehen, wobei durch eine Sperrung zwischen Anschlag und Kegelradgetriebe ein verdrehter Schwenkarm verriegelt wird.

Der Haltearm ist in Längsrichtung verstellbar am Fahrzeuglenkgestänge befestigt, um eine Rollenspurverstellung gegebenenfalls vornehmen zu können.

Für eine Rollenhöhenverstellung ist zweckmäßigerweise die Tastrolle längs ihrer Drehachse verstellbar, und zwar insbesondere über eine Spannhohlschraube.

Durch die Erfindung wird eine einfache betriebssichere mechanische Rollenführungseinrichtung für ein automatisches Fahrzeuglenksystem geschaffen, die bei Nichtbetrieb (Stillstand des Fahrzeugs, nichtautomatischer Lenkbetrieb) schnell aus ihrer verlängerten Betriebsstellung in eine kompakte Nichtbetriebsstellung gefahren werden kann. Die Umstellung von der einen Lenkbetriebsart auf die andere erfolgt bevorzugt durch einen einzigen Gleichstromgetriebemotor, der kompakt am bzw. im Haltearm der Rollenführungseinrichtung aufgenommen ist. Bei nichtautomatischem Lenkbetrieb wird die Gesamtbreite des Fahrzeugs durch das Fahrzegchassis bzw. den Fahrzeugaufbau festgelegt, wobei dann keine störenden verkehrsgefährdenden seitlichen Verlängerungen am Fahrzeug mehr vorhanden sind. Damit wird einem "Dual-Mode"-Fahrzeuglenksystem mit mechanischer Steuerautomatik mit Hilfe einfcher Mittel optimal Rechnung getragen.

Die Erfindung wird nachfolgen anhand eines Ausführungsbeispiels unter Bezugnahme auf die Zeichnung näher erläutert; es zeigt:

Fig. 1 eine schematische Darstellung einer ausgefahrenen erfindungsgemäßen Rollenführungseinrichtung am linken Vorderrad eines nichtschienengebundenen Fahrzeugs, wobei die Rollenführungseinrichtung mit einer (linken) Sollspurführung in Eingriff steht (automatischer Lenkbetrieb),

Fig. 2 die Rollenführungseinrichtung nach Fig. 1 im eingezogenen Zustand (nichtautonmatischer Lenkbetrieb),

Fig. 3 das Antriebsschema der Rollenführungseinrichtung nach den Fig. 1 und 2, und

Fig. 4 eine Einzelheit des Schwenkarms längs der Linie III - III der Fig. 3.

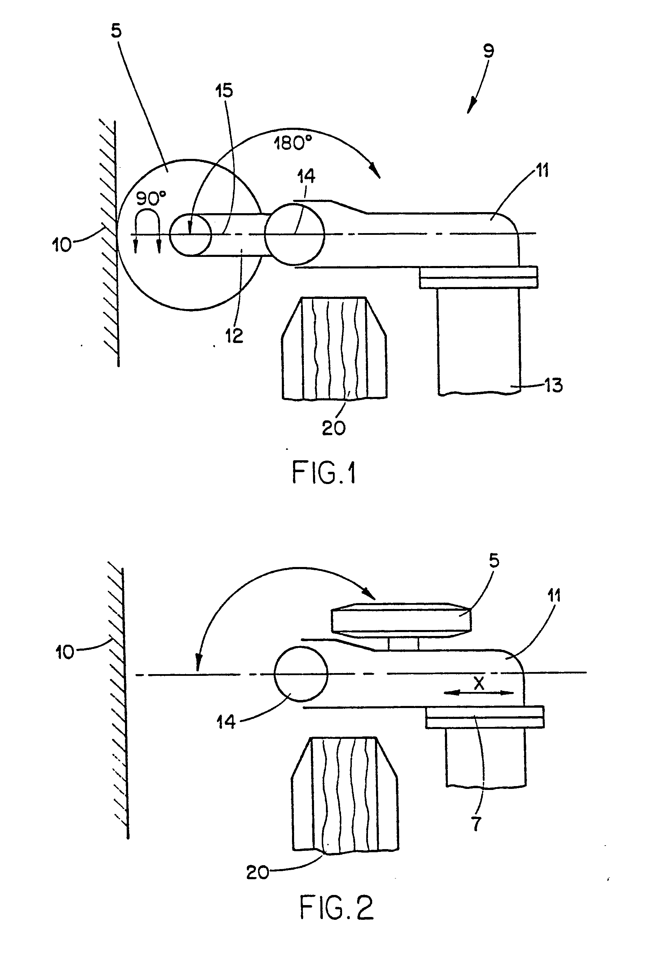

Gemäß Fig. 1 umfaßt eine Rollenführungseinrichtung eine Rolenhalterung 9, die im wesentlichen aus einem Haltearm 11 und einem am vorderen Haltearmende schwenkbar befestigten Schwenkarm 12 besteht. Der Haltearm 11 besitzt ein Flanschteil 7, das mit dem Lenkgestänge 13 eines Fahrzeugs beispielsweise mittels Schrauben verbunden ist. Das Lenkgestänge 13 schafft eine mechanische Lenkverbindung zum linken Fahrzeugvorderrad 20.

Am freien Ende des Schwenkarms 12 ist eine frei drehbare Tastrolle 5 abgestützt, die gemäß Fig. 1 in einem Rolleingriff mit einer ortsfesten (linken) Sollspurführung 10 steht. Bei einem automatischen Lenkbetrieb eines Fahrzeugs wird bei linker Sollspurführung die Tastrolle 5 in einem fortwährenden Rolleingriff an der Sollspurführung 10 unter Vorspannung gehalten, wobei das linke Vorderrad 20 zu einem Lenkeinschlag nach links tendiert.

Bei einem nichtautomatischen Lenkbetrieb des Fahrzeugs nimmt die Rollenführungseinrichtung die in Fig. 2 gezeigte Stellung ein. Der Schwenkarm 12, der gemäß Fig. 1 in Verlängerung des Haltearms 11 liegt, ist in Fig. 2 um die Schwenkachse 14 um 180° in den U-förmig ausgebildeten Haltearm 11 geschwenkt. Der Schwenkarm 12 erfährt bei seiner Schwenkbewegung um 180° eine Drehbewegung um seine Längsachse (90°-Drehung) in einer Weise, daß die Tastrolle 5 in unmittelbarer Nachbarschaft des Haltearms 11 im wesentlichen parallel zum Flanschteil 7 gemäß Fig. 2 zu liegen kommt. In dieser Stellung befinden sich Haltearm 11, Schwenkarm 12 sowie Tastrolle 5 in einer sehr kompakten Anordnung innerhalb des Fahrzeugchassis.

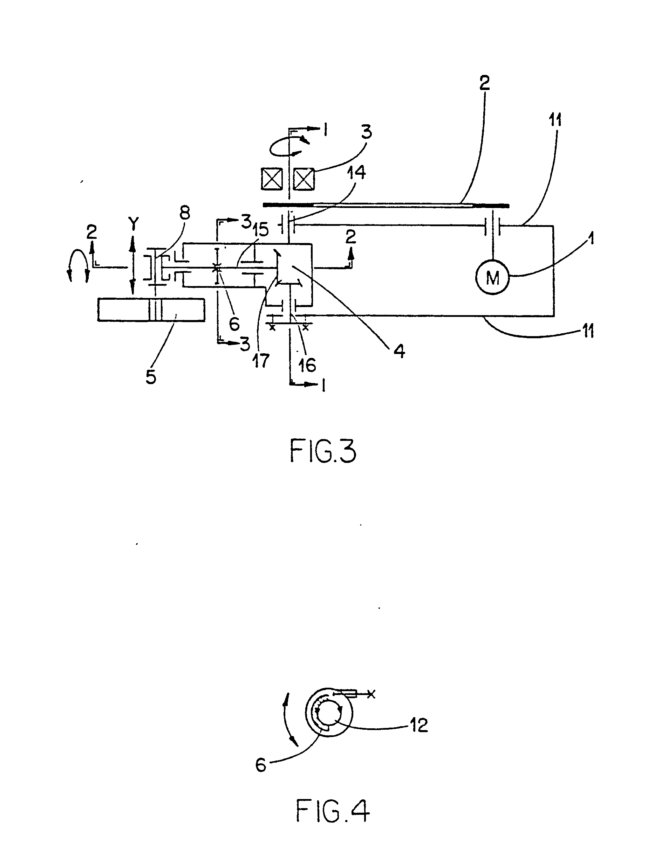

Das Antriebsschema der Rollenführungseinrichtung nach den Fig. 1 und 2 ist in Fig. 3 veranschaulicht. Im U-förmig ausgebildeten Haltearm 11 befindet sich ein Gleichstromgetriebemotor 1, der über einen Kettentrieb 2 die Schwenkachse 14 längs der Rotationsachse I - I in Drehbewegung versetzt.

Die Schwenkachse 14 und der senkrecht dazu angeordnote Schwenkarm 12 stehen über ein Kegelradgetriebe 4 in einem gegenseitigen Eingriff. Das Kegelradgetriebe 4 umfaßt ein Kegelrad 16 in Ausrichtung zur Rotationsachse I - I der Schwenkache 14, welches nichtdrehbar am Haltearm 11 befestigt ist. Das Kegelrad 16 kämmt mit einem senkrecht dazu angeordneten weiteren Kegelrad 17, das in fester Verbindung mit der Längsachse 15 des Schwenkarms 12 steht, welcher im Gehäuse des Kegelradgetriebes 4 drehbar abgestützt ist. Das Kegelradgetriebegehäuse ist starr mit der Schwenkachse 14 verbunden.

Das gemäß Fig. 3 linke Ende des verdrehbaren Schwenkarms umfaßt eine Rollenlagerung, durch die die Tastrolle 5 frei drehbar ist. Die Tastrolle 5 ist längs ihrer Drehachse durch eine Spannhohlschraube 8 in Richtung y höhenverstellbar, um diese an die Höhe einer zugeordneten Sollspurführung 10, beispielsweise einer Leitschiene, anzupassen.

Eine weitere Verstellmöglichkeit der Rollenführungseinrichtung ergibt sich durch das schienenartige Flanschteil 7 im Bereich der Befestigungsstelle des Lenkgestänges 13. Ersichtlich kann die Maximalauskragung der augefahrenen Tastrolle 5 im Bereich x längs des Flanschteils 7 verstellt werden. Hierzu ist selbstverständlich ein vorheriges Lösen der Verbindungsschrauben erforderlich. Eine stufenlose Verstellung der Rollenspur im Bereich x ist denkbar, wenn beispielsweise der Flanschteil 7 einen Schwalbenschwanzquerschnitt aufweist und Stellschrauben vorgesehen sind.

Die Tastrolle 5 besitzt eine Arretierung im ausgefahrenen Zustand durch einen Rotationsanschlag 6 des Schwenkarms bzw. der Längsachse 15, der bzw. die gegen eine gehäusefeste Stellschraube anschlagen kann, welche in das Gehäuse des Kegelradgetriebes geschraubt ist. Der Rotationsanschlag 6, der in einer Nut-Feder-Verbindung zum Schwenkarm 12 stoht, ist im einzelnen in Fig. 4 gezeigt.

Am äußeren Drehende der Schwenhachse 14 im Bereich des Kettentriebs 2 ist eine Lastmomentsperre 3 angeordnet, die jegliche Kraftübertragung von der Sollspurführung 10 über eine eingreifende Tastrolle 5 zum Gleichstromgetriebemotor 1 verhindert. Gleichwohl ist sichergestellt, daß bei Betrieb des Gleichstromgetriebemotors 1 eine Verschwenkung des Schwenkarms 12 bei gleichzeitiger 90°-Drehung des Schwenkarms erfolgt. Aus dem Antriebsschema nach Fig. 3 in Verbindung mit den Fig. 1 und 2 ist ersichtlich, daß ein Einfahren und ein Ausfahren der Tastrolle 5 durch Rotation um 180° um die Achse I - I möglich ist (Primärantrieb). Es erfolgt eine Drehung der Tastrolle 5 durch Rotation um 90° um die Achse II - II (Sekundärantrieb). Primär- und Sekundärantrieb überlagern sich in einer Weise, daß ein Ein- und Ausfahren bei gleichzeitiger Drehung der Rolle so erfolgt, daß nach einer 180°-Drehung um die Achse I - I die Rotation um 90° um die Achse II - II ebenfalls abgeschlossen ist. Durch die Lastmomentsperre 3 wird die Tastrolle 5 sowohl in eingefahrener als auch in ausgefahrener Stellung nach ihrer Rotation um die Achse I - I verriegelt, so daß zwischen Rolle und Haltearm keine Relativbewegung mehr stattfinden kann. Die Lastmomentsperre 3 entlastet auf diese Weise den Primärantrieb von den Betriebskräften, ist jedoch von der Antriebsseite her jederzeit zum Ein- und Ausfahren entriegelbar.

**Patentansprüche**

1. Fahrzeug mit Rollenführungseinrichtung, die eine Tastrolle (5), die an eine stationäre Sollspurführung (10) anlegbar ist, und eine Rollenhalterung aufweist, die im wesentlichen aus einem mit dem Lenkgestänge verbundenen Haltearm (11) und einem am vorderen Haltearmende schwenkbar befestigten Schwenkarm (12) steht, der an seinem freien Ende die frei drehbare Tastrolle (5) haltert, wobei der Schwenkarm (12) auf einer eingefahrenen Stellung, in der er den Haltearm (11) in Schwenkachsrichtung im wesentlichen überlagert, in eine ausgefahrene, im wesentlichen gestreckte Stellung um ca. 180° schwenkbar ist, in welcher der Schwenkarm (12) in Bezug auf den Haltearm (11) im wesentlichen ausgerichtet ist, dadurch gekennzeichnet, daß
   - die Tastrolle (5) bei ausgefahrenem Schwenkarm (12) über die Gesamtquererstreckung des Fahrzeugs weit übersteht,
   - die Tastrolle (5) unter Vorspannung an der Sollspurführung (10) anliegt und
   - die Tastrolle (5) gemeinsam mit dem Schwenkarm (12) bei dessen Einfahren um dessen Längsachse (15) um 90° schwenkbar ist.

2. Fahrzeug mit Rollenführungseinrichtung nach Anspruch 1, dadurch gekennzeichnet, daß die Schwenkachse des Schwenkarms (12) durch einen Primärantrieb in Form eines am Haltearm (11) befestigten Gleichstromgetriebemotors (1) antreibbar ist.

3. Fahrzeug mit Rollenführungseinrichtung nach Anspruch 2, dadurch gekennzeichnet, daß die Schwenkachse des Schwenkarms (12) über einen Kettenantrieb (2) durch den Gleichstromgetriebemotor (1) antreibbar ist.

4. Fahrzeug mit Rollenführungseinrichtung nach Anspruch 2 oder 3, dadurch gekennzeichnet, daß die Schwenkachse des Schwenkarms (12) eine Lastmomentsperre (3) aufweist, die den Schwenkarm (12) in der eingefahrenen wie in der ausgeschwenkten Endstellung verriegelt und durch Betätigen des Gleichstromgetriebemotors (1) entriegelbar ist.

5. Fahrzeug mit Rollenführungseinrichtung nach Anspruch 1 bis 4, dadurch gekennzeichnet, daß im Schwenkarm (12) ein Sekundärantrieb in Form eines Kegelradgetriebes (4) integriert ist, durch den bei sich schwenkendem Schwenkarm letzterer um seine Längsachse gedreht werden kann.

6. Fahrzeug mit Rollenführungseinrichtung nach Anspruch 5, dadurch gekennzeichnet, daß das Kegelradgetriebe (4) ein in Ausrichtung der Schwenkachse des Schwenkarms (12) angeordnetes Kegelrad (16) aufweist, das mit dem Haltearm (11) fest verbunden ist und mit einem weiteren Kegelrad (17) kämmt, das in Ausrichtung der Längsachse (15) des Schwenkarms (12) liegt und an letzterem befestigt ist.

7. Fahrzeug mit Rollenführungseinrichtung nach Anspruch 5 oder 6, dadurch gekennzeichnet, daß auf der Längsachse (15) des Schwenkarms (12) ein Rotationsanschlag (6) vorgesehen ist, wobei durch eine Sperrung zwischen Anschlag (6) und Kegelradgetriebe (4) ein verdrehter Schwenkarm (12) verriegelt wird.

8. Fahrzeug mit Rollenführungseinrichtung nach den Ansprüchen 1 - 7, dadurch gekennzeichnet, daß der Haltearm (11) in seiner Längsrichtung vertikal am Fahrzeuglenkgestänge (13) befestigt ist.

9. Fahrzeug mit Rollenführungseinrichtung nach den Ansprüchen 1 - 8, dadurch gekennzeichnet, daß die Tastrolle (5) längs ihrer Drehachse verstellbar ist.

10. Fahrzeug mit Rollenführungseinrichtung nach Anspruch 9, dadurch gekennzeichnet, daß die Tastrolle (5) über eine Spannhohlschraube (8) in Achsrichtung verstellbar ist.


**Claims**

1. A vehicle with a roller guiding mechanism having a scanning roller (5) engageable with a stationary reference track guide (10) and having a roller mounting consisting substantially of a holding arm (11) connected with the steering linkage, and of a pivoting arm (12) pivotably attached to the front end of the holding arm and mounting at its free end the freely rotatable scanning roller (5), wherein the pivoting arm (12), when in a retracted position in which it substantially overlies the holding arm (11) in the direction of the pivoting axis, is pivotable by about 180° into an extended, substantially outstretched position in which the pivoting arm (12) is substantially aligned in relation to the holding arm (11), characterized in that
- the scanning roller (5) projects substantially beyond the total transverse extent of the vehicle, when the pivoting arm (12) is extended,
- the scanning roller (5) lies under pre-stress on the reference track guide (10), and,
- the scanning roller (5), jointly with the pivoting arm (12) is pivotable by 90° about the longitudinal axis (15) of the latter, when the latter is retracted.

2. A vehicle with a roller guiding mechanism according to claim 1, characterised in that the pivoting axis of the pivoting arm (12) is drivable by a primary drive in the form of a direct current gear motor (1) attached to the holding arm (11).

3. A vehicle with a roller guiding mechanism according to claim 2, characterised in that the pivoting axis of the pivoting arm (12) is drivable by the direct current gear motor (1) through a chain drive (2).

4. A vehicle with a roller guiding mechanism according to claim 2 or 3, characterized in that the pivoting axis of the pivoting arm (12) has a load moment stop means (3) which locks the pivoting arm (12) in the retracted and likewise in the extended end position, and which is releasable by actuating the direct current gear motor (1).

5. A vehicle with a roller guiding mechanism according to claim 1 to 4, characterized in that in the pivoting arm (12) there is integrated a secondary drive in the form of a bevel gearing (4), by means of which the pivoting arm, when it is being pivoted, can be rotated about its longitudinal axis.

6. A vehicle with a roller guiding mechanism according to claim 5, characterized in that the bevel gearing (4) has a bevel gear (16) arranged in alignment with the pivoting axis of the pivoting arm (12) and being fixedly connected with the holding arm (11) and which meshing with another bevel gear (17) in alignment with the longitudinal axis (15) of the pivoting arm (12) and being attached thereto.

7. A vehicle with a roller guiding mechanism according to claim 5 or 6, characterised in that a rotating stop member (6), is provided on the longitudinal axis (15) of the pivoting arm (12), whereby pivoting of pivoting arm (12) is locked by means of a locking between stop member (6) and bevel gearing (4).

8. A vehicle with a roller guiding mechanism according to claims 1 - 7, characterised in that the holding arm (11) is attached in its longitudinal direction vertically to the steering linkage (13) of the vehicle.

9. A vehicle with a roller guiding mechanism according to claims 1 - 8, characterized in that the scanning roller (5) is displaceable along its rotation axis.

10. A vehicle with a roller guiding mechanism according to claim 9, characterized in that the scanning roller (5) is displaceable in the axial direction by means of a hollow clamping screw (8).


**Revendications**

1. Véhicule à dispositif de guidage à galet, comprenant un galet palpeur (5) applicable sur un guidage à piste de référence (10) stationnaire et une fixation de galet qui se compose principalement d'un bras support (11) relié à la tringlerie de direction et d'un bras pivotant (12) fixé de manière pivotante à l'extrémité avant de bras support, qui maintient à son extrémité libre le galet palpeur (5) tournant librement, le bras pivotant (12) pouvant à cette occasion pivoter d'environ 180°, d'une position escamotée, dans laquelle il recouvre principalement le bras support (11) en direction de l'axe de pivotement, vers une position sortie, principalement en extension, dans laquelle le bras pivotant (12) est principalement aligné, relativement au bras support (11), caractérisé en ce que:

- le galet palpeur (5) est largement en saillie sur l'étendue transversale globale du véhicule, lorsque le bras pivotant (12) est sorti,

- le galet palpeur (5) appuie sous précontrainte, sur le guidage à piste de référence (10) et

- en ce que le galet palpeur (5) est pivotant de 90°, avec le bras pivotant (12), lors de son escamotage, autour de l'axe longitudinal (15).

2. Véhicule à dispositif de guidage à galet selon la revendication 1, caractérisé en ce que l'axe de pivotement du bras pivotant (12) peut être entraîné par un entraînement primaire, sous forme d'un moteur d'entraînement à engrenages à courant continu (1) fixé au bras support (11).

3. Véhicule à dispositif de guidage à galet selon la revendication 2, caractérisé en ce que l'axe de pivotement du bras pivotant (12) peut être entraîné par un entraînement à chaîne (2), au moyen du moteur d'entraînement à engrenages à courant continu (1).

4. Véhicule à dispositif de guidage à galet selon la revendication 2 ou 3, caractérisé en ce que l'axe de pivotement du bras pivotant (12) possède un verrou à couple résistant (3), qui verrouille le bras pivotant (12), en position finale escamotée, comme en position finale pivotée et est déverrouillable par actionnement du moteur d'entraînement à engrenages à courant continu (1).

5. Véhicule à dispositif de guidage à galet selon la revendication 1 à 4, caractérisé en ce qu'un entraînement secondaire sous forme d'une transmission à roue conique (4) est intégré dans le bras pivotant (12) et au moyen duquel ce dernier peut être tourné autour de son axe longitudinal, lorsque le bras pivotant pivote.

6. Véhicule à dispositif de guidage à galet selon la revendication 5, caractérisé en ce que la transmission à roue conique (4) possède une roue conique (16), disposés dans l'alignement de l'axe de pivotement du bras pivotant (12) et qui est rigidement reliée au bras support (11) et engrène avec une autre roue conique (17), située dans l'alignement de l'axe longitudinal (15) du bras pivotant (12) et fixée sur ce, dernier.

7. Véhicule à dispositif de guidage à galet selon la revendication 5 ou 6, caractérisé en ce qu'une butée de rotation (6) est prévue sur l'axe longitudinal (15) du bras pivotant (12), faisant qu'un bras pivotant (12), ayant tourné, est verrouillé par un verrouillage, entre butée (6) et transmission à roue conique (4).

8. Véhicule à dispositif de guidage à galet selon les revendications 1 à 7, caractérisé en ce que le bras support (11) est fixé verticalement dans sa direction longitudinale, sur la tringlerie de direction de véhicule (13).

9. Véhicule à dispositif de guidage à galet selon les revendications 1 à 8, caractérisé en ce que le galet palpeur (5) est ajustable le long de son axe de rotation.

10. Véhicule à dispositif de guidage à galet selon la revendication 9, caractérisé en ce que le galet palpeur (5) est ajustable dans la direction de l'axe, au moyen d'une vis creuse de serrage (8).

FIG.1

FIG.2

FIG.3

FIG.4